(19) Europäisches Patentamt / European Patent Office / Office européen des brevets

(11) **EP 4 637 247 A1**

(12) **EUROPEAN PATENT APPLICATION**
published in accordance with Art. 153(4) EPC

(43) Date of publication:
**22.10.2025 Bulletin 2025/43**

(21) Application number: **24784039.0**

(22) Date of filing: **14.03.2024**

(51) International Patent Classification (IPC):
**H04W 72/40** (2023.01)

(86) International application number:
**PCT/CN2024/081739**

(87) International publication number:
**WO 2024/207954 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.04.2023 CN 202310371122**

(71) Applicant: **ZTE Corporation**
**Shenzhen, Guangdong 518057 (CN)**

(72) Inventors:
• **BI, Feng**
**Shenzhen, Guangdong 518057 (CN)**

• **LU, Youxiong**
**Shenzhen, Guangdong 518057 (CN)**
• **MIAO, Ting**
**Shenzhen, Guangdong 518057 (CN)**
• **XING, Weimin**
**Shenzhen, Guangdong 518057 (CN)**
• **HU, Yuzhou**
**Shenzhen, Guangdong 518057 (CN)**
• **HE, Haigang**
**Shenzhen, Guangdong 518057 (CN)**
• **CHEN, Jie**
**Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **APPLICATION METHOD FOR REFERENCE SIGNAL RECEIVED POWER, COMMUNICATION APPARATUS, AND STORAGE MEDIUM**

(57) Provided are an application method for reference signal received power, a communication apparatus, and a storage medium. The application method for reference signal received power comprises: determining second reference signal received power according to first reference signal received power and a first parameter; and excluding a resource for a first entity according to the result of comparison between the second reference signal received power and a first reference signal received power threshold.

Determine second reference signal received power according to first reference signal received power and a first parameter — S301

Exclude a resource for a first entity according to the result of comparison between the second reference signal received power and a first reference signal received power threshold — S302

FIG. 4

**Description**

The present disclosure claims a priority to Chinese Patent Application No. 202310371122.0, filed on April 4, 2023, which is hereby incorporated by reference in its entirety.

TECHNICAL FIELD

The present disclosure relates to the technical field of wireless communications, and in particular, to an application method for reference signal received power, a communication apparatus, and a storage medium.

BACKGROUND

With the continuous advancement of radio technology, various radio services have emerged in large numbers. In addition to cellular services between base stations and terminals, Long Term Evolution (LTE) and New Radio (NR) systems also include Vehicle to Anything (V2X) services. A V2X service is abbreviated as LTE V2X, LTE-V or LTE sidelink in LTE, and is abbreviated as NR V2X, NR-V or NR sidelink in NR. A communication link for a V2X service is referred to as a sidelink (SL).

SUMMARY

In an aspect, there is provided an application method for reference signal received power. The application method for reference signal received power is applied to a first entity, and the method includes:

determining a second reference signal received power according to a first reference signal received power and a first parameter; and
excluding a resource for the first entity according to a comparison result between the second reference signal received power and a first reference signal received power threshold.

In another aspect, there is provided an application method for reference signal received power. The application method for reference signal received power is applied to a first entity, and the method includes:

determining a second reference signal received power threshold according to a first reference signal received power threshold and a first parameter;
excluding a resource for the first entity according to a comparison result between a first reference signal received power and the second reference signal received power threshold.

In yet another aspect, there is provided a communication apparatus. The communication apparatus includes:

a determination module, configured to determine a second reference signal received power according to a first reference signal received power and a first parameter; and
an exclusion module, configured to exclude a resource for a first entity according to a comparison result between the second reference signal received power and a first reference signal received power threshold.

In yet another aspect, there is provided a communication apparatus. The communication apparatus includes:

a determination module, configured to determine a second reference signal received power threshold according to a first reference signal received power threshold and a first parameter;
an exclusion module, configured to exclude a resource for a first entity according to a comparison result between a first reference signal received power and the second reference signal received power threshold.

In yet another aspect, there is provided a communication node. The communication node includes: a memory and a processor; the memory is coupled to the processor; the memory is configured to store computer programs; and the processor implements the application method for reference signal received power according to any one of the above-mentioned aspects upon executing the computer programs.

In yet another aspect, there is provided a computer-readable storage medium. The computer-readable storage medium stores computer program instructions, and in response to that the computer program instructions are executed by a processor, the application method for reference signal received power according to any one of the above-mentioned aspects is implemented.

In yet another aspect, there is provided a computer program product. The computer program product includes computer program instructions, in response to that the computer program instructions are executed by a processor, the application method for reference signal received power according to any of the above-mentioned aspects is implemented.

BRIEF DESCRIPTION OF THE DRAWINGS

In order to describe the technical solutions in the present disclosure more clearly, accompanying drawings needed to be used in some embodiments of the present disclosure will be introduced briefly below. Obviously, the accompanying drawings described below are merely accompanying drawings of some embodiments of the present disclosure, and an ordinary person of those skilled in the art may obtain other accompanying drawings according to these accompanying drawings.

FIG. 1 is a schematic diagram of a system architecture according to some embodiments.
FIG. 2 is a schematic diagram of an application scenario according to some embodiments.
FIG. 3 is a schematic diagram of another application scenario according to some embodiments.
FIG. 4 is a flowchart of an application method for reference signal received power according to some embodiments.
FIG. 5 is a flowchart of another application method for reference signal received power according to some embodiments.
FIG. 6 is a structural schematic diagram of a communication apparatus according to some embodiments.
FIG. 7 is a structural schematic diagram of another communication apparatus according to some embodiments.
FIG. 8 is a structural schematic diagram of yet another communication apparatus according to some embodiments.

DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of embodiments of the present disclosure, but not all of the embodiments. All other embodiments obtained based on the embodiments of the present disclosure by an ordinary person of those skilled in the art without paying any creative effort shall belong to the protection scope of the present disclosure.
It should be noted that in the present disclosure, wordings, such as "exemplarily" or "for example" and variations thereof are used to indicate examples, instances, or illustrations. Any embodiment or design solution described with "exemplarily" or "for example" in the present disclosure should not be illustrated as being more preferred or advantageous over other embodiments or design solutions. Specifically, the usage of the wordings such as "exemplarily" or "for example" is intended to present relevant concepts in a concrete way.
Hereinafter, expressions "first" and "second," etc., are used for descriptive purposes only, and are not to be understood as indicating or implying the relative importance or implicitly indicating a number of indicated technical features. Thus, features limited with wordings like "first" or "second," etc., may explicitly or implicitly include one or more of the feature(s).
In the description of the present disclosure, unless otherwise specified, "/" means an "or" relationship, for example, "A/B" may represent A or B. The term "and/or" in the description merely represents a relevant relationship for describing related objects, which represents that there may be three relationships. For example, A and/or B may represent: only A; only B; or both A and B. In addition, "at least one" means one or more, and "plurality" means two or more.
For ease of understanding, relevant concepts involved in the embodiments of the present disclosure are briefly introduced first.
A sidelink, also referred to as a direct link, a lateral link, a side link or a direct communication interface (PC5 interface) link, etc.
A sidelink communication refers to a wireless communication directly performed among/between multiple terminal devices (e.g., two terminal devices). In this communication mode, multiple terminal devices geographically close to each other may perform communication directly without passing through any network device. Data transmission in a sidelink communication is different from a typical cellular network communication. The typical cellular network communication includes uplink (UL) transmission (i.e., a terminal device sending data to a network device) and downlink (DL) transmission (i.e., a network device sending data to a terminal device). However, in the sidelink communication, data is sent directly from a terminal device at a transmitting end to a terminal device at a receiving end through an air interface (such as a PC5 interface) without passing through any network device. A sidelink communication manner includes, but is not limited to, a device-to-device (D2D) communication (such as an early warning communication for disasters such as earthquakes and fires); or a V2X communication (such as communications in remote driving, self-driving etc.).
The above description is an introduction to some concepts involved in the embodiments of the present disclosure, which will not be repeated below.

With the continuous advancement of radio technology, various radio services have emerged in large numbers. In addition to cellular services between base stations and terminals, LTE and NR systems also include V2X services. A V2X service is abbreviated as LTE V2X, LTE-V or LTE sidelink in LTE, and is abbreviated as NR V2X, NR-V or NR sidelink in NR. A communication link for a V2X service is referred to as an SL.

The SL may be classified into three types of main communication scenarios: a scenario of in coverage, which refers to that both a data source device and a target device are within a coverage range of a base station; a scenario of partial coverage, which refers to that one of the data source device and the target device is within the coverage range of the base station, and another of the data source device and the target device is outside the coverage range of the base station; a scenario of out of coverage, which refers to that both the data source device and the target device are outside the coverage range of the base station.

The SL may be classified into two types of main communication modes: a first type mode (abbreviated as mode 3 in LTE, and abbreviated as mode 1 in NR), which refers to that a resource for a device to send a sidelink signal comes from scheduling of a base station; a second mode (abbreviated as mode 4 in LTE, and abbreviated as mode 2 in NR), which refers to that a device autonomously selects a resource of a resource pool in a resource pool configured by the network or a pre-configured resource pool according to a resource selection strategy (the resource selection strategy mainly includes: a sensing mechanism, a partial sensing mechanism, a random selection mechanism).

In a V2X deployment scenario involved in the latest NR system, it is necessary to consider a coexistence of LTE V2X and NR V2X in a same frequency resource (the same frequency resource generally refers to a same carrier, a same frequency band, etc.). In this case, problem of mutual interference may occur.

For the above technical problems, an application method for reference signal received power is provided in the embodiments of the present disclosure. The application method for reference signal received power provided in the embodiments of the present disclosure will be illustrated below with reference to the accompanying drawings of the specification.

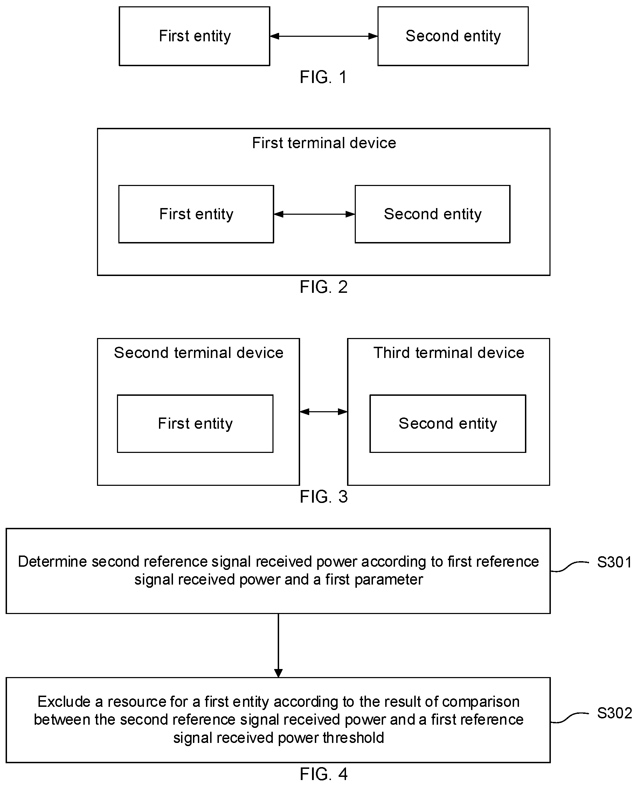

FIG. 1 is a schematic diagram of a system architecture involved in an application method for reference signal received power provided in the embodiments of the present disclosure. As shown in FIG. 1, the system architecture includes: a first entity and a second entity.

In some embodiments, the first entity may be of a first communication standard; and the second entity may be of a second communication standard.

In an example, the first communication standard may be the 5th Generation mobile communication technology (5G); and the second communication standard may be the 4th Generation mobile communication technology (4G).

In another example, the first communication standard may be a post-5G communication standard; the second communication standard may be a communication standard such as 5G, or the like.

The embodiments of the present disclosure are illustrated below by taking the first communication standard being 5G and the second communication standard being 4G as an example.

Exemplarily, the above-mentioned first entity may be an NR SL module; the above-mentioned second entity may be an LTE SL module.

The above-mentioned NR SL module utilizes a physical sidelink control channel (PSCCH) and a physical sidelink shared channel (PSSCH). The above-mentioned LTE SL module usually utilizes a PSSCH.

The PSCCH is configured to carry sidelink control information; the PSSCH is configured to carry service data. Exemplarily, when there is a service needed to be transmitted between devices (i.e., user equipments (UEs) with V2X functions), service data between devices does not need to be forwarded via other network devices, but may be directly transmitted from a data source device to a target device, that is, devices may perform communications with each other directly.

In some embodiments, the NR SL module utilizes an NR SL, and the NR SL module may be configured to detect a reference signal received power (RSRP) of the NR SL.

In some embodiments, the LTE SL module utilizes an LTE SL, and the LTE SL module may be configured to detect LTE SL RSRP.

In some embodiments, the LTE SL module may share or transmit the LTE SL RSRP to the NR SL module.

In some embodiments, the first entity and the second entity may be respectively arranged in two devices; or the first entity and the second entity may be integrated into one device.

Exemplarily, FIG. 2 is a schematic diagram of a scenario involved in the method provided in the embodiments of the present disclosure. As shown in FIG. 2, a first entity and a second entity may be integrated in a first terminal device. In this scenario, the first entity and the second entity belong to the same terminal device, so data may be shared between the first entity and the second entity. For example, in a case where the first entity is an NR SL module and the second entity is an LTE SL module, the LTE SL module may share the LTE SL RSRP to the NR SL module.

Exemplarily, FIG. 3 is a schematic diagram of another scenario involved in the method provided in the embodiments of the present disclosure. As shown in FIG. 3, the above-mentioned first entity may be arranged in a second terminal device; and the second entity may be arranged in a third terminal device. In this scenario, the first entity and the second entity are respectively arranged in different terminal devices. Therefore, transmission of data between the first entity and the second entity needs a device-to-device transmission between the second terminal device and the third terminal device.

Exemplarily, the second terminal device and the third terminal device both have a coordination function between devices (i.e., inter-UE coordination (IUC)), so that the second terminal device may transmit data (e.g., NR SL RSRP) to the third terminal device via IUC; the third terminal device may transmit data (e.g., LTE SL RSRP) to the second terminal device via IUC.

The terminal devices involved in the embodiments of the present disclosure (such as the above-mentioned first terminal device, second terminal device, and third terminal device) may be devices that include wireless transceiving functions and can provide communication services for users. For example, a terminal device may be a device in the V2X system, a device in a device-to-device (D2D) system, a device in a machine-type communication (MTC) system, etc. For example, the terminal device may be an industrial robot, an industrial automation device, a user equipment (UE), an access terminal, a user unit, a user station, a mobile station, a mobile platform, a remote station, a remote terminal, a mobile device, a user terminal, a terminal, a wireless terminal device, a user agent, or a user apparatus. For example, the terminal device may be a cellular phone, a cordless phone, a session initiation protocol (SIP) phone, a wireless local loop (WLL) station, a personal digital assistant (PDA), a handheld device and a computing device with wireless communication functions or other processing devices connected to a wireless modem, a vehicle-mounted device, a wearable device, a terminal device in a 5G network or a post-5G network, or a terminal device in a future evolved public land mobile network (PLMN), which is not limited in the present disclosure.

It should be noted that, the system architecture and application scenarios described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of the system architecture and the emergence of new service scenarios, the technical solutions provided in the embodiments of the present disclosure are also applicable to similar technical problems.

An application method for reference signal received power provided in the embodiments of the present disclosure is introduced below.

In some embodiments, the application method for reference signal received power provided in the embodiments of the present disclosure may be applied to the first entity as shown in FIG. 1. As shown in FIG. 4, the method may be implemented as the following S301 to S302.

In S301, a second reference signal received power is determined according to a first reference signal received power and a first parameter.

In some embodiments, in a case where the first entity is an NR SL module and the second entity is an LTE SL module, the first reference signal received power is an LTE SL RSRP, and the LTE SL RSRP is used to characterize a signal strength of a reference signal of an LTE SL.

In some embodiments, the LTE SL RSRP is measured by the second entity, therefore, before S301, the method further includes: acquiring the first reference signal received power shared or transmitted from the second entity. Exemplarily, in a case where the first entity and the second entity belong to a same terminal device, the second entity shares the first reference signal received power to the first entity. In the case where the first entity and the second entity are respectively arranged on two different devices, the second entity transmits the first reference signal received power to the first entity.

In some embodiments, the first parameter is used to adjust the first reference signal received power.

In some embodiments, the above-mentioned first parameter may include at least one of the following Parameter 1 to Parameter 5.

Parameter 1: a bandwidth of a sidelink control channel of a first sidelink, a bandwidth of a sidelink service channel of the first sidelink, and a total bandwidth of the sidelink control channel of the first sidelink and the sidelink service channel of the first sidelink.

Exemplarily, the above-mentioned first sidelink may be an LTE SL. The bandwidth of the sidelink control channel of the above-mentioned first sidelink may be a bandwidth of a PSCCH of the first sidelink; the bandwidth of the sidelink service channel of the above-mentioned first sidelink may be a bandwidth of a PSSCH of the first sidelink; the total bandwidth of the sidelink control channel and the sidelink service channel of the above-mentioned first sidelink may be a sum of the bandwidth of the PSCCH of the first sidelink and the bandwidth of the PSSCH of the first sidelink.

Parameter 2: a measurement type of a second sidelink.

Exemplarily, the above-mentioned second sidelink may be an NR SL.

Exemplarily, the measurement type of the second sidelink (NR SL sl-RS-ForSensing) may include a first measurement type or a second measurement type.

The first measurement type may be a PSSCH measurement type, that is, a type of measuring a PSSCH RSRP based on a PSSCH demodulation reference signal (DMRS).

The first measurement type may be a PSCCH measurement type, that is, a type of measuring PSCCH RSRP based on a PSCCH DMRS.

Parameter 3: a scaling factor of a sub-carrier spacing (SCS) of the second sidelink.

Exemplarily, a relationship between a sub-carrier spacing and a scaling factor of the sub-carrier spacing may refer to the following Table 1.

Table 1

| μ | SCS |
|---|-----|
| 0 | 15Khz |
| 1 | 30Khz |
| 2 | 60Khz |
| 3 | 120Khz |
| 4 | 240Khz |
| 5 | 480Khz |

Exemplarily, the scaling factor of the sub-carrier spacing may be represented by μ.

In some embodiments, a sub-carrier spacing of the LTE SL is fixed, which is 15Khz. A sub-carrier spacing of the NR SL is optional, that is, the sub-carrier spacing of the NR SL may be any one of 15khz, 30khz, 60khz, 120khz or 240khz.

Parameter 4: a number of antenna ports of the second sidelink.

The number of antenna ports refers to logical transmitting channels defined by a reference signal. The number of antenna ports is related to a type of a reference signal. There are as many antenna ports as there are types of reference signals.

In some embodiments, the LTE SL usually has one antenna port, and the NR SL usually has two or more antenna ports.

Parameter 5: a preset adjustment value.

The above-mentioned preset adjustment value may be a positive value or a negative value, and a unit of the preset adjustment value is dB or dBm.

In some embodiments, the above-mentioned preset adjustment value may be determined according to an actual usage condition, and a determination manner of the preset adjustment value is not limited in the embodiments of the present disclosure.

In some embodiments, the above-mentioned determining the second reference signal received power according to the first reference signal received power and the first parameter may be implemented in the following manner:

Manner 1: in a case where the first parameter includes the parameter 1, the second reference signal received power is determined according to the first reference signal received power and the parameter 1.

Exemplarily, the second reference signal received power may be determined by the following formula (1):

$$RSRP_{\text{valid}} = 10log_{10}((10^{(RSRP_{ini}+X1)/10} \cdot B_{PSCCH} + 10^{(RSRP_{ini})/10} \cdot B_{PSSCH})/B_{PSCCH+PSSCH}) \quad \text{Formula(1)}$$

where $RSRP_{valid}$ represents the second reference signal received power, $RSRP_{ini}$ represents the first reference signal received power, $B_{PSCCH}$ represents the bandwidth of the sidelink control channel of the first sidelink, $B_{PSSCH}$ represents the bandwidth of the sidelink service channel of the first sidelink, $B_{PSCCH+PSSCH}$ represents the total bandwidth of the sidelink control channel of the first sidelink and the sidelink service channel of the first sidelink, and $X1$ represents a first compensation value.

In some embodiments, the first compensation value is determined according to a signal power difference between the sidelink control channel and the sidelink service channel. Exemplarily, the above-mentioned first compensation value may be a value of power spectral density (PSD) boosting of the LTE SL PSCCH. For example, the first compensation value may be 3dB (or dBm).

It can be understood that, since LTE only supports a sidelink service channel (i.e., PSSCH), NR supports both sidelink service channel (i.e., PSSCH) and sidelink control channel (i.e., PSCCH). Therefore, the first reference signal received power (LTE SL RSRP) acquired by the NR SL module is a power of the sidelink service channel of the first sidelink, and the NR SL module cannot use the first reference signal received power directly. Therefore, the NR SL module may construct the reference signal received power of the sidelink control channel of the first sidelink (e.g., the $RSRP_{ini}+X1$ in the above-mentioned formula (1)) according to the sum of the first reference signal received power and the first compensation value (e.g., 3dB, where a power difference between the sidelink control channel and the sidelink service channel is usually 3dB); and then obtain the second reference signal received power according to the first reference signal received power and the bandwidth of the first sidelink service channel, the reference signal received power of the sidelink control channel of the first sidelink and the bandwidth of the sidelink control channel of the first sidelink, and the total bandwidth of the sidelink control channel of the first sidelink and the sidelink service channel of the first sidelink.

Manner 2: in a case where the above-mentioned first parameter includes the parameter 2, the second reference signal received power is determined according to the first reference signal received power and the parameter 2.

Exemplarily, in a case where the above-mentioned first parameter includes that the measurement type of the second sidelink is the first measurement type (PSSCH measurement type), the above-mentioned second reference signal received power is equal to the first reference signal received power. That is, $RSRP_{valid}=RSRP_{ini}$.

In a case where the above-mentioned second parameter includes that the measurement type of the second sidelink is the second measurement type (PSCCH measurement type), the second reference signal received power is determined according to a sum of the first reference signal received power and a second compensation value. That is, $RSRP_{valid}=RSRP_{ini}+X2$.

Herein, the second compensation value is determined according to a signal power difference between the sidelink control channel and the sidelink service channel. Exemplarily, the above-mentioned second compensation value may be a value of LTE SL PSCCH PSD boosting, for example, the second compensation value may be 3dB (or dBm).

It can be understood that in a case where the measurement type of the second sidelink is the first measurement type (PSSCH measurement type), the first entity measures the reference signal received power of the NR SL PSSCH channel. Since LTE only supports the sidelink service channel (i.e., PSSCH), the first reference signal received power shared or transmitted from the second entity and acquired by the first entity is the reference signal received power of the LTE SL PSSCH channel, and therefore the second reference signal received power may be equal to the first reference signal received power.

In a case where the measurement type of the second sidelink is the second measurement type (PSCCH measurement type), what the first entity measured is the reference signal received power of the NR SL PSCCH channel. Since LTE only supports the sidelink service channels (i.e., PSSCH), the first reference signal received power shared or transmitted from the second entity and acquired by the first entity is the reference signal received power of the LTE SL PSSCH channel, and the first entity cannot use the first reference signal received power directly. Therefore, the first entity may construct the reference signal received power of the LTE SL PSSCH channel (e.g., $RSRP_{ini}+X2$ in the above-mentioned formula) according to the sum of the first reference signal received power and the second compensation value (e.g., 3dB, where the power difference between the sidelink control channel and the sidelink service channel is usually 3dB).

Manner 3: in a case where the above-mentioned first parameter includes the parameter 3, the second reference signal received power is determined according to the first reference signal received power and the parameter 3.

Exemplarily, the above-mentioned second reference signal received power may be determined according to the following formula (2):

$$RSRP_{valid} = RSRP_{ini}+10\log_{10}(2^{\mu}) \qquad \text{Formula (2)}$$

where $\mu$ represents the scaling factor of the sub-carrier spacing of the second sidelink.

It can be understood that, the sub-carrier spacing of LTE SL is fixed, which is 15Khz. A sub-carrier spacing of the NR SL is optional, may be any one of 15khz, 30khz, 60khz, 120khz or 240khz. Therefore, the first reference signal received power acquired by the NR SL module is a reference signal received power detected by the LTE SL module in a case where the sub-carrier spacing is 15Khz, and the NR SL module cannot use the first reference signal received power directly. Therefore, the NR SL module may adjust the first reference signal received power according to the scaling factor of the sub-carrier spacing to obtain the second reference signal received power.

Exemplarily, it is assumed that the scaling factor $\mu$ of the sub-carrier spacing of the second sidelink is 0, $RSRP_{valid}=RSRP_{ini}+10\lg1= RSRP_{ini}$. It is assumed that the scaling factor $\mu$ of the sub-carrier spacing of the second sidelink is 1, $RSRP_{valid}=RSRP_{ini}+10\lg2\approx RSRP_{ini}+3$. It is assumed that the scaling factor $\mu$ of the sub-carrier spacing of the second sidelink is 2, $RSRP_{valid}=RSRP_{ini}+10\lg4\approx RSRP_{ini}+6$. It is assumed that the scaling factor $\mu$ of the sub-carrier spacing of the second sidelink is 3, $RSRP_{valid}=RSRP_{ini}+10\lg8>:::;RSRP_{ini}+9$. It is assumed that the scaling factor $\mu$ of the sub-carrier spacing of the second sidelink is 4, $RSRP_{valid}=RSRP_{ini}+10\lg16\approx RSRP_{ini}+12$.

Manner 4: in a case where the above-mentioned first parameter includes the parameter 4, the second reference signal received power is determined according to the first reference signal received power and the parameter 4.

Exemplarily, the second reference signal received power may be determined according to the following formula (3):

$$RSRP_{valid}=RSRP_{ini}+10\log_{10}(1/N) \qquad \text{Formula (3)}$$

where N represents the number of antenna ports of the second sidelink.

It could be understood that, since LTE SL usually has one antenna port, NR SL usually has two or more antenna ports, the first reference signal received power acquired by the NR SL module is the reference signal received power detected by the LTE SL module through one antenna port, and the NR SL module cannot use the first reference signal received power directly. Therefore, the NR SL module may adjust the first reference signal received power according to the number of antenna ports to obtain the second reference signal received power.

Exemplarily, it is assumed that the number of antenna ports N of the second sidelink is 2, $RSRP_{valid}=RSRP_{ini}+10lg(1/2)= RSRP_{ini}-3$.

Manner 5: in a case where the first parameter includes the parameter 5, the second reference signal received power is determined according to the first reference signal received power and the parameter 5.

Exemplarily, the second reference signal received power is determined according to a sum of the first reference signal received power and the preset adjustment value. For example, $RSRP_{valid}=RSRP_{ini}+Y$, where Y represents the preset adjustment value.

It could be understood that, the preset adjustment value may be determined according to an actual usage condition in the embodiments of the present disclosure, and then the second reference signal received power may be obtained by adjusting the first reference signal received power.

In S302, a resource is excluded for the first entity according to a comparison result between the second reference signal received power and a first reference signal received power threshold.

The first reference signal received power threshold is an initial reference signal received power threshold.

In some embodiments, the above-mentioned resource includes a time domain resource and/or a frequency domain resource. Exemplarily, the time domain resource may include at least one of: a mini-slot (also referred to as short-slot), a slot, a subframe, a half-frame or a frame. Exemplarily, the frequency domain resource may include at least one of: a resource element, a resource element group, a resource block, a resource block pair, a resource block group, a bandwidth part, a subchannel, a subband, a carrier, or a band.

In some embodiments, the above-mentioned S302 may be implemented as: in response to that the second reference signal received power is greater than the first reference signal received power threshold, excluding a candidate resource overlapping with a resource of the first sidelink from a candidate resource set of the second sidelink.

It could be understood that, since the reference signal received power reflects a signal strength, in a case where the first sidelink and the second sidelink coexist in the same frequency resource, if the second reference signal received power is greater than the first reference signal received power threshold, it means that a signal strength of the second sidelink is relatively high, which may cause interference to a signal of the first sidelink. Therefore, it is necessary to exclude the candidate resource overlapping with the resource of the first sidelink from the candidate resource set of the second sidelink, so as to avoid signal interference when the first sidelink and the second sidelink coexist in the same frequency resource.

Exemplarily, the candidate resource set of the second sidelink may include all available resources of the second sidelink. In a case where the first sidelink and the second sidelink coexist in the same frequency resource, the candidate resource set of the second sidelink may also include a resource of the first sidelink.

The above-mentioned resource of the first sidelink includes a resource configured for the first sidelink or a resource reserved for the first sidelink.

Exemplarily, the $RSRP_{valid}$ determined according to any one of implementations provided in the above-mentioned manners 1 to 5 is compared with the first reference signal received power threshold (which may be referred to as $Th_{ini}$). If the $RSRP_{valid}$ is higher than $Th_{ini}$, the NR SL module excludes the candidate resource overlapping with the resource of the LTE SL from the candidate resource set of the NR SL.

In some embodiments, the first reference signal received power threshold is determined from a reference signal received power threshold list. Exemplarily, the first reference signal received power may be any reference signal received power threshold in the reference signal received power threshold list.

Exemplarily, the reference signal received power threshold list includes at least one of: a reference signal received power threshold list for the first sidelink, a reference signal received power threshold list for the second sidelink, or a reference signal received power threshold list for the coexistence of the first sidelink and the second sidelink.

In some embodiments, the above-mentioned reference signal received power threshold list for the first sidelink is constructed by the second entity. In some embodiments, the above-mentioned method further includes that: the second entity shares or transmits the first reference signal received power threshold to the first entity.

Exemplarily, $Th (prio_x, prio_y)$ may represent an LTE SL RSRP threshold configured for the LTE SL, and the second entity may construct the reference signal received power threshold list (LTE SL RSRP threshold list) for the first sidelink according to $Th (prio_x, prio_y)$.

$Th (prio_x, prio_y)$ has a one to one correspondence with $Th_{ini}$. Several $Th (prio_x, prio_y)$ constitute the LTE SL RSRP threshold list.

In some embodiments, $prio_x$ may be $prio_{TX}$ or $prio_{RX}$, where $prio_{TX}$ represents a transmission priority, and $prio_{RX}$ represents a reception priority.

In some embodiments, $prio_y$ may be $prio_{TX}$ or $prio_{RX}$, where $prio_{TX}$ represents the transmission priority, and $prio_{RX}$ represents the reception priority.

In some embodiments, the above-mentioned reference signal received power threshold list for the second sidelink is constructed by the first entity.

Exemplarily, Th ($prio_x$, $prio_y$) may represent an NR SL RSRP threshold configured for the NR SL, and the first entity may construct the reference signal received power threshold list (NR SL RSRP threshold list) for the first sidelink according to Th ($prio_x$, $prio_y$).

Th ($prio_x$, $prio_y$) has a one to one correspondence with $Th_{ini}$. Several Th ($prio_x$, $prio_y$) constitute the NR SL RSRP threshold list.

In some embodiments, the reference signal received power threshold list for the coexistence of the first sidelink and the second sidelink may be constructed by the first entity.

Exemplarily, Th ($prio_x$, $prio_y$) may represent a coexistence SL RSRP threshold configured for the NR SL, and the first entity may construct the reference signal received power threshold list (coexistence SL RSRP threshold list) for the coexistence of the first sidelink and the second sidelink according to Th ($prio_x$, $prio_y$).

Th ($prio_x$, $prio_y$) has a one to one correspondence with $Th_{ini}$. Several Th ($prio_x$, $prio_y$) constitute the coexistence SL RSRP threshold list.

In some embodiments, for an i-th $Th_{ini}$ in the reference signal received power threshold list, the i-th $Th_{ini}$ may be determined according to $i=(prio_x-1)*8+ prio_y$ or $i= prio_x +(prio_y -1)*8$, where i is an integer greater than or equal to 1.

In summary, based on the method provided in the embodiments of the present disclosure, the first entity (e.g., the NR SL module) may determine the second reference signal received power according to the first reference signal received power (LTE SL RSRP) and the first parameter; and then exclude the resource for the first entity according to the comparison result between the second reference signal received power and the first reference signal received power threshold. It could be understood that, due to the difference between LTE and NR, the NR SL module cannot use the first reference signal received power directly after obtaining the first reference signal received power, and the first reference signal received power needed to be adjusted by adopting the first parameter to generate the second reference signal received power. Since the reference signal received power may reflect the signal strength, in the embodiments of the present disclosure, the second reference signal received power may be compared with the first reference signal received power threshold, and the resource may be excluded for the first entity according to the comparison result. It can be seen that according to the method provided in the embodiments of the present disclosure, the NR SL module may be enabled to apply LTE SL RSRP to exclude a resource to avoid interference when LTE V2X and NR V2X coexist in the same frequency resource.

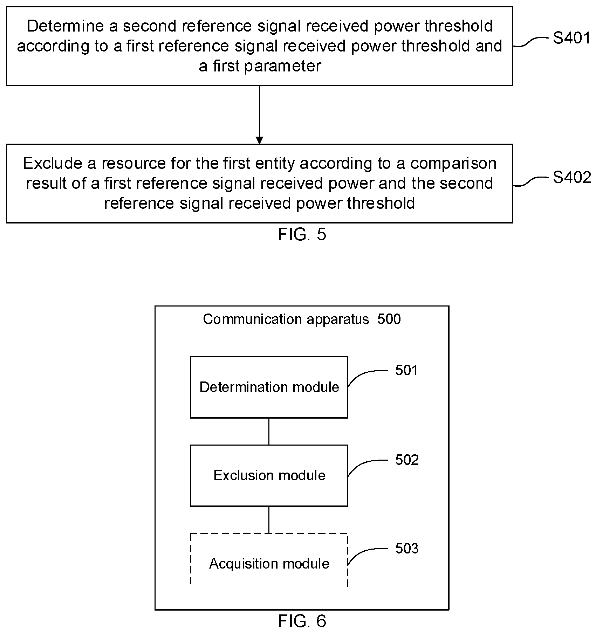

In some embodiments, another application method for reference signal received power is provided in the embodiments of the present disclosure for adjusting a first reference signal received power threshold. The method is applied to a first entity. Exemplarily, as shown in FIG. 5, the method includes the following S401-S402.

In S401, a second reference signal received power threshold is determined according to a first reference signal received power threshold and a first parameter.

The first reference signal received power threshold is an initial reference signal received power threshold.

In some embodiments, the above-mentioned first parameter is used to adjust the first reference signal received power threshold.

In some embodiments, the above-mentioned first parameter may include at least one of the following Parameter 1 to Parameter 5.

Parameter 1: a bandwidth of a sidelink control channel of a first sidelink, a bandwidth of a sidelink service channel of the first sidelink, and a total bandwidth of the sidelink control channel of the first sidelink and the sidelink service channel of the first sidelink. Exemplarily, the above-mentioned first sidelink may be an LTE SL.

Parameter 2: a measurement type of a second sidelink. Exemplarily, the above-mentioned second sidelink may be an NR SL.

Parameter 3: a scaling factor of a sub-carrier spacing of the second sidelink.

Parameter 4: a number of antenna ports of the second sidelink.

Parameter 5: a preset adjustment value.

In some embodiments, the above-mentioned determining the second reference signal received power threshold according to the first reference signal received power threshold and the first parameter may be implemented in the following manners:

Manner 1: in a case where the first parameter includes the parameter 1, the second reference signal received power threshold is determined according to the first reference signal received power threshold and the parameter 1.

Exemplarily, the second reference signal received power threshold may be determined according to a difference between the first reference signal received power threshold and a first compensation value.

The first compensation value is determined according to a signal power difference between the sidelink control channel and the sidelink service channel. Exemplarily, the first compensation value may be a value of LTE SL PSCCH PSD boosting, for example, the first compensation value may be 3dB (or dBm).

It could be understood that, since LTE only supports a sidelink service channel (i.e., PSSCH), and NR supports both sidelink service channel (i.e., PSSCH) and sidelink control channel (i.e., PSCCH), the first reference signal received power (LTE SL RSRP) acquired by the NR SL module is a power of the sidelink service channel of the first sidelink, and the NR SL module cannot directly compare the first reference signal received power with the first reference signal received power threshold. Therefore, the NR SL module may adjust the first reference signal received power threshold according to the first compensation value (e.g., 3dB, where a power difference between the sidelink control channel and the sidelink service channel is usually 3dB) to obtain the second reference signal received power threshold, and use the second reference signal received power threshold to compare with the first reference signal.

Manner 2: in a case where the first parameter includes the parameter 2, the second reference signal received power threshold is determined according to the first reference signal received power threshold and the parameter 2.

Exemplarily, in a case where the above-mentioned first parameter includes that the measurement type of the second sidelink is a first measurement type (PSSCH measurement type), the above-mentioned second reference signal received power threshold is equal to the first reference signal received power threshold. That is, $Th_{valid}=Th_{ini}$.

In a case where the above-mentioned second parameter includes that the measurement type of the second sidelink is a second measurement type (PSCCH measurement type), the second reference signal received power threshold is determined according to a difference between the first reference signal received power threshold and a second compensation value. That is, $Th_{valid}=Th_{ini}-X$.

The second compensation value is determined according to a signal power difference between the sidelink control channel and the sidelink service channel. Exemplarily, the above-mentioned second compensation value may be a value of LTE SL PSCCH PSD boosting, for example, the second compensation value may be 3dB (or dBm).

It can be understood that in a case where the measurement type of the second sidelink is the first measurement type (PSSCH measurement type), the first entity measures the reference signal received power of the NR SL PSSCH channel. Since LTE only supports a sidelink service channel (i.e., PSSCH), the first reference signal received power shared or transmitted from the second entity and obtained by the first entity is the reference signal received power of the LTE SL PSSCH channel. Therefore, the second reference signal received power threshold may be equal to the first reference signal received power threshold.

In a case where the measurement type of the second sidelink is the second measurement type (PSCCH measurement type), what the first entity measured is the reference signal received power of the NR SL PSCCH channel. Since LTE only supports a sidelink service channel (i.e., PSSCH), the first reference signal received power shared or transmitted from the second entity and obtained by the first entity is the reference signal received power of the LTE SL PSSCH channel, and the first entity cannot directly compare the first reference signal received power with the first reference signal received power threshold. Therefore, the first entity adjusts the first reference signal received power threshold. For example, the second reference signal received power threshold may be determined according to a difference between the first reference signal received power threshold and the second compensation value (e.g., 3dB, where the power difference between the sidelink control channel and the sidelink service channel is usually 3dB).

Manner 3: in a case where the first parameter includes the parameter 3, the second reference signal received power threshold is determined according to the first reference signal received power threshold and the parameter 3.

Exemplarily, the second reference signal received power threshold may be determined according to the following formula (4):

$$Th_{valid} = Th_{ini} - 10\log_{10}(2^{\mu}) \qquad\qquad \text{Formula (4)}$$

where $Th_{valid}$ represents the second reference signal received power threshold, $Th_{ini}$ represents the first reference signal received power threshold, and $\mu$ represents the scaling factor of the sub-carrier spacing of the second sidelink.

It can be understood that, the sub-carrier spacing of LTE SL is fixed, which is 15Khz. A sub-carrier spacing of the NR SL is optional, may be any one of 15khz, 30khz, 60khz, 120khz or 240khz. Therefore, the first reference signal received power acquired by the NR SL module is the reference signal received power detected by the LTE SL module in a case where the sub-carrier spacing is 15Khz. The NR SL module cannot directly compare the first reference signal received power with the first reference signal received power threshold. Therefore, the NR SL module may adjust the first reference signal received power threshold. For example, the first reference signal received power threshold is adjusted according to the scaling factor of the sub-carrier spacing to obtain the second reference signal received power threshold.

Exemplarily, it is assumed that the scaling factor $\mu$ of the sub-carrier spacing of the second sidelink is 0, $Th_{valid}=Th_{ini}-10\lg1=Th_{ini}$. It is assumed that the scaling factor $\mu$ of the sub-carrier spacing of the second sidelink is 1,

$Th_{valid}=Th_{ini}-10lg2 \approx Th_{ini}-3$. It is assumed that the scaling factor $\mu$ of the sub-carrier spacing of the second sidelink is 2, $Th_{valid}=Th_{ini}-10lg4 \approx Th_{ini}-6$. It is assumed that the scaling factor $\mu$ of the sub-carrier spacing of the second sidelink is 3, $Th_{valid}=Th_{ini}-10lg8 \approx Th_{ini}-9$. It is assumed that the scaling factor $\mu$ of the sub-carrier spacing of the second sidelink is 4, $Th_{valid}=Th_{ini}-10lg16 \approx Th_{ini}-12$.

Manner 4: in a case where the first parameter includes the parameter 4, the second reference signal received power threshold is determined according to the first reference signal received power threshold and the parameter 4.

Exemplarily, the second reference signal received power threshold may be determined according to the following formula (5):

$$Th_{valid} = Th_{ini}-10 \log_{10} (1/N) \qquad \text{Formula (5)}$$

N represents the number of antenna ports of the second sidelink.

It could be understood that, since LTE SL usually has one antenna port, NR SL usually has two or more antenna ports, the first reference signal received power acquired by the NR SL module is the reference signal received power detected by the LTE SL module through one antenna port, and the NR SL module cannot directly compare the first reference signal received power with the first reference signal received power threshold. Therefore, the NR SL module may adjust the first reference signal received power threshold. For example, the first reference signal received power threshold is adjusted according to the number of antenna ports to obtain the second reference signal received power threshold.

Exemplarily, it is assumed that the number of antenna ports N of the second sidelink is 2, $Th_{valid}=Th_{ini}-10lg(1/2)=Thini+3$.

Manner 5: in a case where the first parameter includes the parameter 5, the second reference signal received power threshold is determined according to the first reference signal received power threshold and the parameter 5.

Exemplarily, the second reference signal received power threshold is determined according to a difference between the first reference signal received power threshold and the preset adjustment value. For example, $Th_{valid}=Th_{ini}-Y$, where Y represents the preset adjustment value.

It could be understood that, the preset adjustment value may be determined according to an actual usage condition in the embodiments of the present disclosure, and then the second reference signal received power threshold may be obtained by adjusting the first reference signal received power threshold.

In S402, a resource is excluded for the first entity according to a comparison result between a first reference signal received power and the second reference signal received power threshold.

In some embodiments, in a case where the first entity is an NR SL module and the second entity is an LTE SL module, the first reference signal received power is an LTE SL RSRP, and the LTE SL RSRP is used to characterize a signal strength of a reference signal of an LTE SL.

In some embodiments, the above-mentioned resource includes a time domain resource and/or a frequency domain resource. Exemplarily, the time domain resource may include at least one of: a mini-slot (also referred to as short-slot), a slot, a subframe, a half-frame or a frame. Exemplarily, the frequency domain resource may include at least one of: a resource element, a resource element group, a resource block, a resource block pair, a resource block group, a bandwidth part, a subchannel, a subband, a carrier, or a band.

In some embodiments, the above-mentioned S402 may be implemented as: in response to that the first reference signal received power is greater than the second reference signal received power threshold, excluding a candidate resource overlapping with a resource of the first sidelink from a candidate resource set of the second sidelink.

It could be understood that, since the reference signal received power reflects a signal strength, in a case where the first sidelink and the second sidelink coexist in the same frequency resource, if the first reference signal received power is greater than the second reference signal received power threshold, it means that a signal strength of the second sidelink is relatively high, which may cause interference to a signal of the first sidelink. Therefore, it is necessary to exclude the candidate resource overlapping with the resource of the first sidelink from the candidate resource set of the second sidelink, so as to avoid signal interference when the first sidelink and the second sidelink coexist in the same frequency resource.

The above-mentioned resource of the first sidelink includes a resource configured for the first sidelink or a resource reserved for the first sidelink.

Exemplarily, $Th_{valid}$ determined according to any one of the implementations provided in the above-mentioned manners 1 to 5 is compared with the first reference signal received power (which may be referred to as $RSRP_{ini}$). If $RSRP_{ini}$ is higher than $Th_{valid}$, the NR SL module excludes the candidate resource overlapping with the resource of LTE SL from the candidate resource set of NR SL.

In some embodiments, the first reference signal received power threshold is determined from a reference signal received power threshold list. Exemplarily, the first reference signal received power may be any reference signal received power threshold in the reference signal received power threshold list.

Exemplarily, the reference signal received power threshold list includes at least one of: a reference signal received power threshold list for the first sidelink; a reference signal received power threshold list for the second sidelink; or a reference signal received power threshold list for the coexistence of the first sidelink and the second sidelink.

The above-mentioned first sidelink reference signal received power threshold list is constructed by the second entity. In some embodiments, the above-mentioned method further includes that: the second entity shares or transmits the first reference signal received power threshold to the first entity.

In summary, based on the method provided in the embodiments of the present disclosure, the first entity (e.g., the NR SL module) may determine the second reference signal received power threshold according to the first reference signal received power threshold (SL RSRP threshold) and the first parameter; and then exclude a resource for the first entity according to the comparison result between the first reference signal received power and the second reference signal received power threshold. It could be understood that, due to the difference between LTE and NR, the NR SL module cannot directly compare the first reference signal received power with the first reference signal received power threshold after acquiring the first reference signal received power. Therefore, in the embodiments of the present disclosure, the first parameter may be used to adjust the first reference signal received power threshold to generate the second reference signal received power; and then exclude the resource for the first entity according to the comparison result between the first reference signal received power and the second reference signal received power threshold. It can be seen that according to the method provided in the embodiments of the present disclosure, the NR SL module may be enabled to apply LTE SL RSRP to exclude a resource to avoid interference when LTE V2X and NR V2X coexist in the same frequency resource.

It can be understood that, in order to implement the above functions, the communication apparatus includes corresponding hardware structures and/or software modules for implementing various functions. Those skilled in the art should easily realize that the present disclosure may be implemented in the form of hardware or a combination of hardware and computer software in combination with algorithms and steps described in the embodiments of the present disclosure. Whether a certain function is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The communication apparatus may be divided into functional modules according to the above method embodiments in the present disclosure. For example, each functional module may be divided corresponding to each function, or two or more functions may be integrated into one functional module. The integrated module may implemented in the form of hardware, or may be implemented in the form of software. It should be noted that the division for the modules in the embodiments of the present disclosure is illustrated, which is only a logical functional division, and there may be other division manners in actual implementation. The following is illustrated by taking an example of dividing each functional module according to each function.

FIG. 6 is a structural schematic diagram of a communication apparatus provided in the embodiments of the present disclosure. The communication apparatus may perform the application method for reference signal received power provided in the above-mentioned method embodiments. As shown in FIG. 6, the communication apparatus 500 includes: a determination module 501 and an exclusion module 502. In some other embodiments, the above-mentioned communication apparatus 500 further includes: an acquisition module 503.

The determination module 501 is configured to determine a second reference signal received power according to a first reference signal received power and a first parameter.

The exclusion module 502 is configured to exclude a resource for a first entity according to a comparison result between the second reference signal received power and a first reference signal received power threshold.

In some embodiments, the acquisition module 503 is configured to acquire the first reference signal received power shared or transmitted from a second entity.

In some embodiments, the above-mentioned first parameter includes at least one of: a bandwidth of a sidelink control channel of a first sidelink, a bandwidth of a sidelink service channel of the first sidelink, and a total bandwidth of the sidelink control channel of the first sidelink and the sidelink service channel of the first sidelink; a measurement type of a second sidelink; a scaling factor of a sub-carrier spacing of the second sidelink; a number of antenna ports of the second sidelink; a preset adjustment value.

In some embodiments, in response to that the first parameter includes a bandwidth of a sidelink control channel of a first sidelink, a bandwidth of a sidelink service channel of the first sidelink, and the total bandwidth of the sidelink control channel of the first sidelink and the sidelink service channel of the first sidelink, the second reference signal received power is capable of being determined according to the following formula:

$$RSRP_{\text{valid}} = 10log_{10}((10^{(RSRP_{ini}+X1)/10} \cdot B_{PSCCH} + 10^{(RSRP_{ini})/10} \cdot B_{PSSCH})/B_{PSCCH+PSSC})$$

where $RSRP_{valid}$ represents the second reference signal received power, $RSRP_{ini}$ represents the first reference signal received power, $B_{PSCCH}$ represents the bandwidth of the sidelink control channel of the first sidelink, $B_{PSSCH}$ represents the bandwidth of the sidelink service channel of the first sidelink, $B_{PSCCH+PSSCH}$ represents the total bandwidth of the sidelink control channel of the first sidelink and the sidelink service channel of the first sidelink, and X1 represents a first compensation value, the first compensation value is determined according to a signal power difference between the sidelink control channel and the sidelink service channel.

In some embodiments, the measurement type of the second sidelink includes: a first measurement type or a second measurement type; in response to that the measurement type of the second sidelink included in the first parameter is the first measurement type, the second reference signal received power is equal to the first reference signal received power; in response to that the measurement type of the second sidelink included in the first parameter is the second measurement type, the second reference signal received power is determined according to a sum of the first reference signal received power and a second compensation value, where the second compensation value is determined according to a signal power difference between the sidelink control channel and the sidelink service channel.

In some embodiments, in response to that the first parameter comprises the scaling factor of the sub-carrier spacing of the second sidelink, the second reference signal received power is determined according to the following formula:

$$RSRP_{valid} = RSRP_{ini} + 10\log_{10}(2^{\mu})$$

where $RSRP_{valid}$ represents the second reference signal received power, $RSRP_{ini}$ represents the first reference signal received power, and $\mu$ represents the scaling factor of the sub-carrier spacing of the second sidelink.

In some embodiments, in response to that the first parameter comprises the number of the antenna ports of the second sidelink, the second reference signal received power is determined according to the following formula:

$$RSRP_{valid} = RSRP_{ini} + 10\log_{10}(1/N)$$

where $RSRP_{valid}$ represents the second reference signal received power, $RSRP_{ini}$ represents the first reference signal received power, and N represents the number of antenna ports of the second sidelink.

In some embodiments, in response to that the first parameter includes the preset adjustment value, the second reference signal received power is determined according to a sum of the first reference signal received power and the preset adjustment value.

In some embodiments, the above-mentioned resource includes: a time domain resource and/or a frequency domain resource; the time domain resource includes at least one of: a mini-slot, a slot, a subframe, a half-frame, and a frame; the frequency domain resource includes at least one of: a resource element, a resource element group, a resource block, a resource block pair, a resource block group, a bandwidth part, a subchannel, a subband, a carrier, and a frequency band.

In some embodiments, the exclusion module 502 is configured to exclude a candidate resource overlapping with a resource of a first sidelink from a candidate resource set of a second sidelink in response to that the second reference signal received power is greater than the first reference signal received power threshold.

In some embodiments, the first reference signal received power threshold is determined from a reference signal received power threshold list.

In some embodiments, the reference signal received power threshold list includes at least one of: a reference signal received power threshold list for a first sidelink; a reference signal received power threshold list for a second sidelink; or a reference signal received power threshold list for a coexistence of the first sidelink and the second sidelink.

In some embodiments, the acquisition module 503 is further configured to acquire the reference signal received power threshold list for the first sidelink shared or transmitted from the second entity.

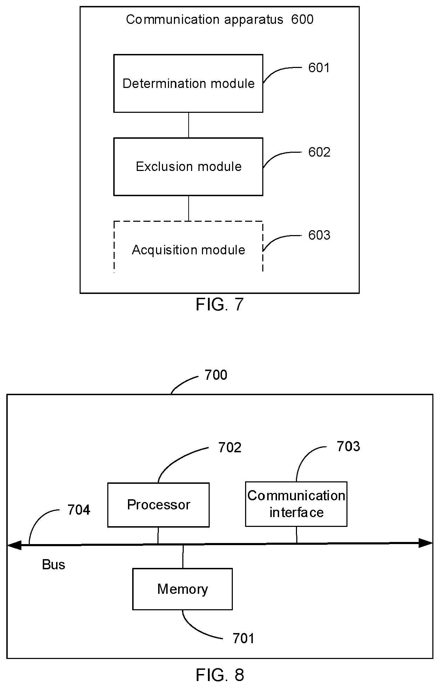

FIG. 7 is a structural schematic diagram of another communication apparatus provided in the embodiments of the present disclosure. The communication apparatus may perform the application method for reference signal received power provided in the above-mentioned method embodiments. As shown in FIG. 7, the communication apparatus 600 includes: a determination module 601 and an exclusion module 602. In some other embodiments, the above-mentioned communication apparatus 600 further includes: an acquisition module 603.

The determination module 601 is configured to determine a second reference signal received power threshold according to a first reference signal received power threshold and a first parameter; the first parameter is used to adjust the first reference signal received power threshold.

The exclusion module 602 is configured to exclude a resource for a first entity according to a comparison result between a first reference signal received power and the second reference signal received power threshold.

In some embodiments, the first parameter includes at least one of: a bandwidth of a sidelink control channel of a first sidelink, a bandwidth of a sidelink service channel of the first sidelink, and a total bandwidth of the sidelink control channel of the first sidelink and the sidelink service channel of the first sidelink; a measurement type of a second sidelink; a scaling factor of a sub-carrier spacing of the second sidelink; a number of antenna ports of the second sidelink; a preset adjustment value.

In some embodiments, in response to that the first parameter comprises a bandwidth of a sidelink control channel of a first sidelink, a bandwidth of a sidelink service channel of the first sidelink, and the total bandwidth of the sidelink control channel of the first sidelink and the sidelink service channel of the first sidelink, the second reference signal received power threshold is capable of being determined according to a difference between the first reference signal received power threshold and a first compensation value, the first compensation value is determined according to a signal power difference between the sidelink control channel and the sidelink service channel.

In some embodiments, the measurement type of the above-mentioned second sidelink includes: a first measurement type or a second measurement type; in response to that the measurement type of the second sidelink included in the first parameter is the first measurement type, the second reference signal received power threshold is equal to the first reference signal received power threshold; in response to that the measurement type of the second sidelink included in the first parameter is the second measurement type, the second reference signal received power threshold is determined according to a difference between the first reference signal received power threshold and a second compensation value, where the second compensation value is determined according to a signal power difference between the sidelink control channel and the sidelink service channel.

In some embodiments, in response to that the first parameter includes the scaling factor of the sub-carrier spacing of the second sidelink, the second reference signal received power threshold is determined according to the following formula:

$$Th_{valid}=Th_{ini}-10\log_{10}(2^{\mu})$$

where $Th_{valid}$ represents the second reference signal received power threshold, $Th_{ini}$ represents the first reference signal received power threshold, and $\mu$ represents the scaling factor of the sub-carrier spacing of the second sidelink.

In some embodiments, in response to that the first parameter includes the number of the antenna ports of the second sidelink, the second reference signal received power threshold is determined according to the following formula:

$$Th_{valid}=Th_{ini}-10\log_{10}(1/N)$$

where $Th_{valid}$ represents the second reference signal received power threshold, $Th_{ini}$ represents the first reference signal received power threshold, and N represents the number of antenna ports of the second sidelink.

In some embodiments, in response to that the first parameter comprises the preset adjustment value, the second reference signal received power threshold is determined according to a difference between the first reference signal received power threshold and the preset adjustment value.

In some embodiments, the above-mentioned resource includes: a time domain resource and/or a frequency domain resource; the time domain resource includes at least one of: a mini-slot, a slot, a subframe, a half-frame, and a frame; the frequency domain resource includes at least one of: a resource element, a resource element group, a resource block, a resource block pair, a resource block group, a bandwidth part, a subchannel, a subband, a carrier, and a frequency band.

In some embodiments, the exclusion module 602 is configured to exclude a candidate resource overlapping with a resource of a first sidelink from a candidate resource set of a second sidelink in response to that the first reference signal received power is greater than the second reference signal received power threshold.

In some embodiments, the first reference signal received power threshold is determined from a reference signal received power threshold list.

In some embodiments, the reference signal received power threshold list includes at least one of: a reference signal received power threshold list for a first sidelink; a reference signal received power threshold list for a second sidelink; or a reference signal received power threshold list for a coexistence of the first sidelink and the second sidelink.

In some embodiments, the acquisition module 603 is configured to acquire the reference signal received power threshold list for the first sidelink shared or transmitted from a second entity.

In a case where the functions of the above-mentioned integrated modules are implemented in the form of hardware, another structure of a communication apparatus involved in the above-mentioned embodiments is provided in the embodiments of the present disclosure. As shown in FIG. 8, the communication apparatus 700 includes: a memory 701, a processor 702, a communication interface 703, and a bus 704.

The memory 701 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 702 may implement or perform various exemplary logical blocks, modules and circuits described in combination with the embodiments of the present disclosure. The processor 702 may be a central processor, a general-purpose processor, a digital signal processor, an application specific integrated circuit, a field programmable gate array, or other programmable logic component, a transistor logic component, a hardware assembly, or any combination thereof. The processor 702 may implement or execute various illustrative logical blocks, modules and circuits described in conjunction with the embodiments of the present disclosure. The processor 702 may also be a combination that implements computing functions, for example, the processor 702 includes a combination of one or more microprocessors, a combination of a DSP (digital signal processor) and a microprocessor, or the like.

The communication interface 703 is configured to connect with other devices through a communication network. The communication network may be the Ethernet, a wireless access network, a wireless local area network (WLAN), or the like.

In some embodiments, the memory 701 may exist independently from the processor 702, and the memory 701 may be connected to the processor 702 through the bus 704 for storing instructions or program codes. When the processor 702 invokes and executes instructions or program codes stored in the memory 701, the processor 702 may implement the application method for reference signal received power provided in the embodiments of the present disclosure.

In embodiments, the memory 701 may be integrated with the processor 702.

The bus 704 may be an extended industry standard architecture (EISA) bus, or the like. The bus 704 may be classified as an address bus, a data bus, a control bus, or the like. For ease of representation, only one thick solid line is used in FIG. 8 for representing the bus 704, but it does not indicate that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the application method for reference signal received power as described in any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory assembly (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the application method for reference signal received power as described in any one of the above-mentioned embodiments.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

**Claims**

1. An application method for reference signal received power, applied to a first entity, **characterized in that** the method comprises:

    determining a second reference signal received power according to a first reference signal received power and a first parameter; and
    excluding a resource for the first entity according to a comparison result between the second reference signal received power and a first reference signal received power threshold.

2. The method according to claim 1, further comprising:
    acquiring the first reference signal received power shared or transmitted from a second entity.

3. The method according to claim 1, wherein the first parameter comprises at least one of:

    a bandwidth of a sidelink control channel of a first sidelink, a bandwidth of a sidelink service channel of the first sidelink, and a total bandwidth of the sidelink control channel of the first sidelink and the sidelink service channel of the first sidelink;
a measurement type of a second sidelink;
a scaling factor of a sub-carrier spacing of the second sidelink;
a number of antenna ports of the second sidelink; or
a preset adjustment value.

4. The method according to claim 3, wherein in response to that the first parameter comprises the bandwidth of the sidelink control channel of the first sidelink, the bandwidth of the sidelink service channel of the first sidelink, and the total bandwidth of the sidelink control channel of the first sidelink and the sidelink service channel of the first sidelink, the second reference signal received power is capable of being determined according to the following formula:

$$RSRP_{\text{valid}} = 10 log_{10}\left(\left(10^{(RSRP_{ini}+X1)/10} \cdot B_{PSCCH} + 10^{(RSRP_{ini})/10} \cdot B_{PSSCH}\right)/B_{PSCCH+PSSC}\right)$$

wherein $RSRP_{valid}$ represents the second reference signal received power, $RSRP_{ini}$ represents the first reference signal received power, $B_{PSCCH}$ represents the bandwidth of the sidelink control channel of the first sidelink, $B_{PSSCH}$ represents the bandwidth of the sidelink service channel of the first sidelink, $B_{PSCCH+PSSCH}$ represents the total bandwidth of the sidelink control channel of the first sidelink and the sidelink service channel of the first sidelink, and $X1$ represents a first compensation value; the first compensation value is determined according to a signal power difference between the sidelink control channel and the sidelink service channel.

5. The method according to claim 3, wherein the measurement type of the second sidelink comprises: a first measurement type or a second measurement type;

in response to that the measurement type of the second sidelink included in the first parameter is the first measurement type, the second reference signal received power is equal to the first reference signal received power;
in response to that the measurement type of the second sidelink included in the first parameter is the second measurement type, the second reference signal received power is determined according to a sum of the first reference signal received power and a second compensation value, wherein the second compensation value is determined according to a signal power difference between the sidelink control channel and the sidelink service channel.

6. The method according to claim 3, wherein in response to that the first parameter comprises the scaling factor of the sub-carrier spacing of the second sidelink, the second reference signal received power is determined according to the following formula:

$$RSRP_{valid} = RSRP_{ini} + 10log_{10}\left(2^{\mu}\right)$$

wherein $RSRP_{valid}$ represents the second reference signal received power, $RSRP_{ini}$ represents the first reference signal received power, and $\mu$ represents the scaling factor of the sub-carrier spacing of the second sidelink.

7. The method according to claim 3, wherein in response to that the first parameter comprises the number of the antenna ports of the second sidelink, the second reference signal received power is determined according to the following formula:

$$RSRP_{valid} = RSRP_{ini} + 10log_{10}(1/N)$$

wherein $RSRP_{valid}$ represents the second reference signal received power, $RSRP_{ini}$ represents the first reference signal received power, and N represents the number of antenna ports of the second sidelink.

8. The method according to claim 3, wherein in response to that the first parameter comprises the preset adjustment value, the second reference signal received power is determined according to a sum of the first reference signal received power and the preset adjustment value.

9. The method according to claim 1, wherein the resource comprises a time domain resource and/or a frequency domain resource;

the time domain resource comprises at least one of: a mini-slot, a slot, a subframe, a half-frame, or a frame;
the frequency domain resource comprises at least one of: a resource element, a resource element group, a resource block, a resource block pair, a resource block group, a bandwidth part, a subchannel, a subband, a carrier, or a band.

10. The method according to claim 1, wherein the excluding the resource for the first entity according to the comparison result between the second reference signal received power and the first reference signal received power threshold comprises:
in response to that the second reference signal received power is greater than the first reference signal received power threshold, excluding a candidate resource overlapping with a resource of a first sidelink from a candidate resource set of a second sidelink.

11. The method according to claim 1, wherein the first reference signal received power threshold is determined from a reference signal received power threshold list.

12. The method according to claim 11, wherein the reference signal received power threshold list comprises at least one of:

a reference signal received power threshold list for a first sidelink;
a reference signal received power threshold list for a second sidelink; or
a reference signal received power threshold list for a coexistence of the first sidelink and the second sidelink.

13. The method according to claim 12, further comprising:
acquiring the reference signal received power threshold list for the first sidelink shared or transmitted from a second entity.

14. An application method for reference signal received power, applied to a first entity, **characterized in that** the method comprises:

determining a second reference signal received power threshold according to a first reference signal received power threshold and a first parameter;
excluding a resource for the first entity according to a comparison result between a first reference signal received power and the second reference signal received power threshold.

15. The method according to claim 14, wherein the first parameter comprises at least one of:

a bandwidth of a sidelink control channel of a first sidelink, a bandwidth of a sidelink service channel of the first sidelink, and a total bandwidth of the sidelink control channel of the first sidelink and the sidelink service channel of the first sidelink;
a measurement type of a second sidelink;
a scaling factor of a sub-carrier spacing of the second sidelink;
a number of antenna ports of the second sidelink; or
a preset adjustment value.

16. The method according to claim 15, wherein in response to that the first parameter comprises the bandwidth of the sidelink control channel of the first sidelink, the bandwidth of the sidelink service channel of the first sidelink, and the total bandwidth of the sidelink control channel of the first sidelink and the sidelink service channel of the first sidelink, the second reference signal received power threshold is capable of being determined according to a difference between the first reference signal received power threshold and a first compensation value, the first compensation value is determined according to a signal power difference between the sidelink control channel and the sidelink service channel.

17. The method according to claim 15, wherein the measurement type of the second sidelink comprises: a first measurement type or a second measurement type;

in response to that the measurement type of the second sidelink included in the first parameter is the first measurement type, the second reference signal received power threshold is equal to the first reference signal received power threshold;

in response to that the measurement type of the second sidelink included in the first parameter is the second measurement type, the second reference signal received power threshold is determined according to a difference between the first reference signal received power threshold and a second compensation value, wherein the second compensation value is determined according to a signal power difference between the sidelink control channel and the sidelink service channel.

18. The method according to claim 15, wherein in response to that the first parameter comprises the scaling factor of the sub-carrier spacing of the second sidelink, the second reference signal received power threshold is determined according to the following formula:

$$Th_{valid}=Th_{ini}-10log_{10}(2^\mu)$$

wherein $Th_{valid}$ represents the second reference signal received power threshold, $Th_{ini}$ represents the first reference signal received power threshold, and $\mu$ represents the scaling factor of the sub-carrier spacing of the second sidelink.

19. The method according to claim 15, wherein in response to that the first parameter comprises the number of the antenna ports of the second sidelink, the second reference signal received power threshold is determined according to the following formula:

$$Th_{valid}=Th_{ini}-10log_{10}(1/N)$$

wherein $Th_{valid}$ represents the second reference signal received power threshold, $Th_{ini}$ represents the first reference signal received power threshold, and N represents the number of antenna ports of the second sidelink.

20. The method according to claim 15, wherein in response to that the first parameter comprises the preset adjustment value, the second reference signal received power threshold is determined according to a difference between the first reference signal received power threshold and the preset adjustment value.

21. The method according to claim 14, wherein the resource comprises a time domain resource and/or a frequency domain resource;

the time domain resource comprises at least one of: a mini-slot, a slot, a subframe, a half-frame, or a frame;
the frequency domain resource comprises at least one of: a resource element, a resource element group, a resource block, a resource block pair, a resource block group, a bandwidth part, a subchannel, a subband, a carrier, or a band.

22. The method according to claim 14, wherein the excluding the resource for the first entity according to the comparison result between the first reference signal received power and the second reference signal received power threshold comprises:

in response to that the first reference signal received power is greater than the second reference signal received power threshold, excluding a candidate resource overlapping with a resource of a first sidelink from a candidate resource set of a second sidelink.

23. The method according to claim 14, wherein the first reference signal received power threshold is determined from a reference signal received power threshold list.

24. The method according to claim 23, wherein the reference signal received power threshold list comprises at least one of:

a reference signal received power threshold list for a first sidelink;
a reference signal received power threshold list for a second sidelink; or
a reference signal received power threshold list for a coexistence of the first sidelink and the second sidelink.

25. The method according to claim 24, further comprising:

acquiring the reference signal received power threshold list for the first sidelink shared or transmitted from a second entity.

26. A communication apparatus, **characterized by** comprising: a processor and a memory for storing instructions executable by the processor;
wherein the processor is configured to execute the instructions, to enable the communication apparatus to perform the application method for reference signal received power according to any one of claims 1 to 25.

27. A computer-readable storage medium, **characterized in that** the computer-readable storage medium has stored computer instructions thereon, in response to that the computer instructions are executed on an electronic device, the electronic device is enabled to perform the application method for reference signal received power according to any one of claims 1 to 25.

First entity ⟷ Second entity

FIG. 1

First terminal device

First entity ⟷ Second entity

FIG. 2

Second terminal device

First entity

⟷

Third terminal device

Second entity

FIG. 3

Determine second reference signal received power according to first reference signal received power and a first parameter — S301

Exclude a resource for a first entity according to the result of comparison between the second reference signal received power and a first reference signal received power threshold — S302

FIG. 4

Determine a second reference signal received power threshold according to a first reference signal received power threshold and a first parameter — S401

Exclude a resource for the first entity according to a comparison result of a first reference signal received power and the second reference signal received power threshold — S402

FIG. 5

Communication apparatus 500

Determination module — 501

Exclusion module — 502

Acquisition module — 503

FIG. 6

Communication apparatus 600

Determination module — 601

Exclusion module — 602

Acquisition module — 603

FIG. 7

— 700

— 702

— 703

Processor

Communication interface

— 704

Bus

Memory

— 701

FIG. 8

## INTERNATIONAL SEARCH REPORT

| International application No. |
| --- |
| **PCT/CN2024/081739** |

### A. CLASSIFICATION OF SUBJECT MATTER

H04W 72/40(2023.01)i

According to International Patent Classification (IPC) or to both national classification and IPC

### B. FIELDS SEARCHED

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

3GPP, VEN, DWPI, ENTXT, CNTXT, ENTXTC: 参考信号接收功率, 传输, 发送共存, 分享, 共存, 共享, 共用, 接收功率, 频带, 时隙, 载波, 资源, common, public, rb, receive, resource?, RSRP, transmission, carrier, frequency, band, share?, power, slot, reference signal

### C. DOCUMENTS CONSIDERED TO BE RELEVANT

| Category* | Citation of document, with indication, where appropriate, of the relevant passages | Relevant to claim No. |
| --- | --- | --- |
| Y | WO 2022077384 A1 (FUJITSU LIMITED) 21 April 2022 (2022-04-21) description, page 1, line 5 to page 3, line 10, page 7, line 23 to page 26, line 29 and page 29, line 25 to page 33, line 25 | 1-27 |
| Y | US 2020383114 A1 (SAMSUNG ELECTRONICS CO., LTD.) 03 December 2020 (2020-12-03) see description, paragraphs [0086]-[0128] | 1-27 |
| A | WO 2021226971 A1 (FUJITSU LIMITED) 18 November 2021 (2021-11-18) entire document | 1-27 |
| A | WO 2021063318 A1 (ZTE CORP.) 08 April 2021 (2021-04-08) entire document | 1-27 |
| A | WO 2023010422 A1 (FUJITSU LIMITED) 09 February 2023 (2023-02-09) entire document | 1-27 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 June 2024** | **21 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/081739** |

| C. | DOCUMENTS CONSIDERED TO BE RELEVANT | |
| --- | --- | --- |
| Category* | Citation of document, with indication, where appropriate, of the relevant passages | Relevant to claim No. |
| A | INTEL CORP. "3GPP TSG RAN WG1 #100-E, R1-2000731" *Remaining Opens of Resource Allocation Mode-2 for NR V2X Design,* 06 March 2020 (2020-03-06), entire document | 1-27 |

Form PCT/ISA/210 (second sheet) (July 2022)

## INTERNATIONAL SEARCH REPORT
### Information on patent family members

International application No.

**PCT/CN2024/081739**

| Patent document cited in search report | | | Publication date (day/month/year) | Patent family member(s) | | | Publication date (day/month/year) |
|---|---|---|---|---|---|---|---|
| WO | 2022077384 | A1 | 21 April 2022 | None | | | |
| US | 2020383114 | A1 | 03 December 2020 | WO | 2018174630 | A1 | 27 September 2018 |
| | | | | CN | 108633065 | A | 09 October 2018 |
| WO | 2021226971 | A1 | 18 November 2021 | None | | | |
| WO | 2021063318 | A1 | 08 April 2021 | CN | 110677883 | A | 10 January 2020 |
| WO | 2023010422 | A1 | 09 February 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310371122